# EUROPÄISCHE PATENTANMELDUNG

(11) **EP 1 333 515 A2**
(43) Veröffentlichungstag der Anmeldung: **06.08.2003**
(21) Anmeldenummer: 03000354.5
(22) Anmeldetag: 10.01.2003
(51) Int. Cl.: H01M 8/02

(54) **Langgestreckte Brennstoffzelle mit Querkanälen zur Gasversorgung**

(30) Priorität: 15.01.2002 DE 10201149
(71) Anmelder: H2-Interpower Brennstoffzellensysteme GmbH, 91126 Schwabach (DE)
(72) Erfinder: Ruthrof, Klaus, 90489 Nürnberg (DE); Burfeind, Jens, 91126 Schwabach (DE); Gunkel, Christian, 91126 Schwabach (DE); Dutschke, Bernhard, 90433 Nürnberg (DE)
(74) Vertreter: Patentanwälte Rehberg + Hüppe

(57) **Zusammenfassung**

Eine langgestreckte Brennstoffzelle (1) weist Querkanäle (6) zur Gasversorgung auf mindestens einer Seite einer Polymer-Elektrolyt-Membran (PEM) (2) auf, wobei die Querkanäle (6) hinter einer die PEM (2) bedeckenden Diffusionsschicht (3) im Bereich einer die Diffusionsschicht (3) rückwärtig abstützenden Elektrodenoberfläche (4) ausgebildet sind und in Querrichtung zu den Längskanten (10) der Brennstoffzelle (1) verlaufen. Mehrere der Querkanäle (6) auf der mindestens einen Seite der PEM (2) weisen einen von einer Längskante (10) zur anderen Längskante (10) der Brennstoffzelle (1) abnehmenden Querschnitt auf.

## Beschreibung

Die Erfindung bezieht sich auf eine langgestreckte Brennstoffzelle mit Querkanälen zur Gasversorgung auf mindestens einer Seite einer Polymer-Elektrolyt-Membran (PEM), wobei die Querkanäle hinter einer die PEM bedeckenden Diffusionsschicht im Bereich einer die Diffusionsschicht rückwärtig abstützenden Elektrodenoberfläche ausgebildet sind und in Querrichtung zu den Längskanten der Brennstoffzelle verlaufen.

Allgemeiner gesagt geht es bei der Erfindung um eine optimierte Gasversorgung für eine langgestreckte Brennstoffzelle, die in einer Richtung in der Haupterstreckungsfläche ihrer PEM eine deutlich größere Ausdehnung aufweist, als senkrecht dazu. Solche Brennstoffzellen können in Richtung ihrer Längserstreckung aufgewickelt sein, um besonders kompakte Abmessungen aufzuweisen.

Soweit in der gesamten vorliegenden Beschreibung und den Ansprüchen der Begriff Brennstoffzelle verwendet wird, so schließt dieser einen Hydrolyseur, also eine Vorrichtung nicht zum kalten Oxidieren eines Brenngases, insbesondere von Wasserstoff, zwecks Gewinnung von elektrischer Energie sondern zum Aufspalten von Wasser in Wasserstoff und Sauerstoff unter Einsatz elektrischer Energie ein, soweit ein solcher Hydrolyseur den prinzipiell gleichen Aufbau wie eine Brennstoffzelle hat.

Eine gewickelte kompakte Brennstoffzelle der eingangs beschriebenen Art ist aus der DE 196 24 887 A1 bekannt. Nähere Information über die Form der Querkanäle sind hier nicht offenbart.

Aus der DE-OS 35 34 725 ist eine aufgewickelte langgestreckte Brennstoffzelle bekannt, bei der Querkanäle zur Versorgung mit in Trägerflüssigkeiten gelösten bzw. gebundenen Gasen durch Rillen in der Elektrodenoberfläche eines über seine gesamte Breite gleichmäßig gewellten Elektrodenformkörper ausgebildet sind.

Der Erfindung liegt die Aufgabe zugrunde, eine langgestreckte Brennstoffzelle der eingangs beschriebenen Art aufzuzeigen, bei der die Gasversorgung über die Querkanäle weiter verbessert ist.

Diese Aufgabe wird erfindungsgemäß dadurch gelöst, dass mehrere der Querkanäle auf der mindestens einen Seite der PEM einen von einer Längskante zur anderen Längskante der Brennstoffzelle abnehmenden Querschnitt aufweisen. nDurch den abnehmenden Querschnitt der Querkanäle wird der Gasanteil kompensiert, der über die Länge der Querkanäle in die angrenzende Diffusionsschicht übertritt. So wird eine gewisse Gasströmungsgeschwindigkeit über die gesamte Länge der Querkanäle aufrecht erhalten. Dies gilt bei der Zufuhr von Brenngasen. Bei der umgekehrten Abfuhr von Reaktionsprodukten und nicht verbrauchten Brenngasen ist die Aufrechterhaltung einer gewissen Mindestgeschwindigkeit der Gasdurchströmung ebenfalls vorteilhaft, um den Abtransport der Reaktionsprodukte tatsächlich zu erreichen.

Bei der neuen Brennstoffzelle können Querkanäle auf beiden Seiten der PEM einen in unterschiedlichen Richtungen abnehmenden Querschnitt aufweisen. Hiermit wird eine Art Gegenstromführung der beiden Reaktionsgase realisiert. Es ergeben sich auch konstruktive Vorteile in Bezug auf den Anschluss der Querkanäle an eine Gasversorgung, der so an gegenüberliegenden Längskanten der Brennstoffzelle erfolgen kann.

Bei der neuen Brennstoffzelle können alle Querkanäle auf mindestens einer Seite der PEM in einen von der einen Längskante zu der Längskante der Brennstoffzelle abnehmenden Querschnitt aufweisen und in einem die Elektrodenoberfläche aufweisenden Elektrodenformkörper vorgesehen sein, dessen Höhe in derselben Richtung wie der Querschnitt der Querkanäle abnimmt. Wenn ein solcher Elektrodenformkörper seitlich im Bereich seiner größeren Höhe bei gleichzeitiger rückwärtiger Abstützung mit einer Kraft beaufschlagt wird, resultiert aus der kraftuntersetzenden schiefen Ebene ein hoher Anpressdruck der Elektrodenoberfläche auf die angrenzende Diffusionsschicht bzw. der Diffusionsschicht auf die angrenzende PEM. Die Querkanäle können auch in einem beispielsweise hinter einem gelochten Elektrodenblech angeordneten Formkörper aus elektrisch leitendem oder isolierendem Material ausgebildet sein.

Günstige geometrische Verhältnisse für diese Art der Aufbringung des Anpressdrucks sind dann gegeben, wenn der Querschnitt des Elektrodenformkörpers ein rechtwinkliges Dreieck beschreibt.

Besonders bevorzugt ist eine Ausführungsform der neuen Brennstoffzelle bei der die Querschnitte der beiden Elektrodenformkörper auf den beiden Seiten der PEM komplementäre Dreiecke beschreiben und Druckaufbringeinrichtungen vorgesehen sind, mit denen die beiden Elektrodenformkörper in Querrichtung zu den Längskanten der Brennstoffzelle gegeneinander beaufschlagbar sind. Wenn dann beide Elektrodenformkörper auch noch rückwärtig abgestützt sind, kann problemlos ein ganz erheblicher Anpressdruck über die Elektrodenoberflächen auf die Diffusionsschichten und von dort auf die PEM aufgebracht werden.

Wenn dabei die Wandstärke jedes Elektrodenformkörpers am Grund der Querkanäle über die wesentliche Länge der Querkanäle konstant ist, stehen die mit ihrem Querschnitt Dreiecke beschreibenden Elektrodenformkörper dennoch einem Aufwickeln der langgestreckten Brennstoffzelle ohne die Entstehung verformender Aufwerfungen nicht entgegen.

Die Querkanäle der neuen Brennstoffzelle können mit mindestens einem im Bereich einer der Längskanten der Brennstoffzelle verlaufenden Längskanal verbunden sein. Dabei kann auf mindestens einer Seite der PEM im Bereich jeder der beiden Längskanten ein Längskanal vorgesehen sein, wobei die beiden Längskanäle im Betrieb der Brennstoffzelle unter unterschiedlichem Druck stehen. Durch den unterschiedlichen Druck wird eine gezielte Gasdurchspülung der Querkanäle erreicht. Dabei können die Querkanäle direkt von dem einen Längskanal auf höheren Druck ausgehen und sich mit verjüngendem Querschnitt bis zu dem anderen Längskanal auf geringerem Druck erstrecken. Es ist aber auch möglich, dass Querkanäle von dem Längskanal auf höherem Druck fingerartig zwischen Querkanäle von dem Längskanal auf niedrigerem Druck eingreifen. Daneben ist auch einen Luftbeatmung mittels Konvektion von offen endenden Querkanälen auf der Sauerstoffseite der Brennstoffzelle möglich.

Jeder der Querkanäle kann bei der neuen Brennstoffzelle in einem die Elektrodenoberfläche aufweisenden Elektrodenformkörper vorgesehen sein. Dabei ist es bevorzugt, wenn alle Kanäle in einen die Elektrodenoberfläche aufweisenden Elektrodenformkörper in nicht abtragender Weise eingeformt sind. Dies bedeutet, dass beispielsweise Formpressverfahren zur Formgebung der Elektrodenformkörper gegenüber zerspanenden Verfahren bevorzugt sind. Besonders stark ist die unterschiedliche Gewichtung dieser beiden Herstellungsarten bei Elektrodenformkörpern, deren Leitfähigkeit durch Graphit bereitgestellt wird.

Sehr bevorzugt sind bei der neuen Brennstoffzelle Elektrodenformkörper aus kunststoffverstärktem Graphit. Es sind aber auch Elektrodenformkörper aus Metall ausbildbar. Hierzu kann beispielsweise Metallblech kalt verformt werden.

Auch wenn bei der neuen Brennstoffzelle in jedem Fall Querkanäle auf mindestens einer Seite der PEM zwischen den Längskanten vorgesehen sind, steht dem nicht entgegen, dass auf mindestens einer Seite der PEM zusätzliche Kanäle vorgesehen sind, die die Querkanäle zwischen den Längskanten der Brennstoffzelle kreuzen. Eine primär auf Querkanälen basierende Gasversorgung ist aber besonders günstig zur Herabsetzung der Biegesteifigkeit der die Elektrodenoberfläche ausbildenden Elektrodenformkörper. Dies vereinfacht wiederum ein etwaiges Aufwickeln der Brennstoffzelle in ihrer Haupterstreckungsrichtung.

Um beispielsweise beim Aufbringen hoher Anpressdrücke zwischen der Elektrodenoberfläche und der Diffusionsschicht einerseits einem Zusammendrücken der Querkanäle oder auch der Längskanäle entgegenzuwirken und um andererseits ein Eindrücken der Diffusionsschicht in diese Kanäle zu verhindern, kann in mindestens einem der Kanäle ein poröser Füllkörper zur Querschnittsstabilisierung des Kanals vorgesehen sein.

Die Erfindung wird im folgenden anhand von Ausführungsbeispielen näher erläutert und beschrieben, dabei zeigt
- Fig. 1: einen Querschnitt durch die wesentlichen Bestandteile einer ersten Ausführungsform der neuen Brennstoffzelle,
- Fig. 2: eine Draufsicht auf eine Elektrodenoberfläche der Brennstoffzelle gemäß Fig. 1,
- Fig. 3: einen Querschnitt durch die wesentlichen Bestandteile einer zweiten Ausführungsform der neuen Brennstoffzelle,
- Fig. 4: eine Draufsicht auf eine Elektrodenoberfläche der Brennstoffzelle gemäß Fig. 3,
- Fig. 5: eine Draufsicht auf eine Elektrodenoberfläche einer gegenüber den Fig. 3 und 4 abgewandelten Ausführungsform der Brennstoffzelle,
- Fig. 6: einen Querschnitt durch die wesentlichen Teile einer weiteren Ausführungsform der neuen Brennstoffzelle,
- Fig. 7: einen Querschnitt durch die wesentlichen Teile einer noch weiteren Ausführungsform der neuen Brennstoffzelle und
- Fig. 8: eine aufgewickelte neue Brennstoffzelle in einer Seitenansicht.

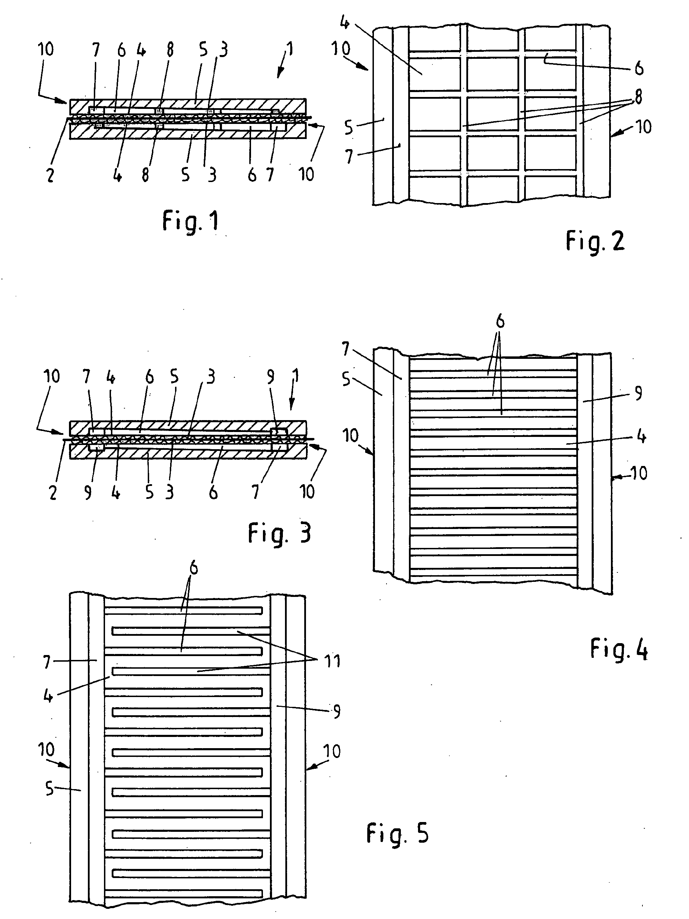

Die in Fig. 1 dargestellte Brennstoffzelle 1 weist eine zentrale Polymer-Elektrolyt-Membran (PEM) 2 auf. Dabei steht PEM neben Polymer-Elektrolyt-Membran auch für den englischen Begriff Protone Exchange Membran, der stärker die Funktion der PEM 2 als Protonenaustauschmembran bei der kalten Oxidation von Wasserstoff zur Gewinnung von Strom in der Brennstoffzelle 1 hinweist. Beidseitig der PEM 2 sind Diffusionsschichten 3 angeordnet, die sich rückwärtig an Elektrodenoberflächen 4 abstützen. Die Elektrodenoberflächen 4 werden von Elektrodenformkörpern 5 ausgebildet. Mit anderen Worten sind die Elektrodenoberflächen 4 die den Diffusionsschichten 3 zugewandten Oberflächen der Elektrodenformkörper 5. In der Oberfläche 4 sind Kanäle 6 bis 8 ausgebildet, deren Anordnung in der Fläche besser aus der Draufsicht auf die Elektrodenoberfläche 4 gemäß Fig. 2 hervorgeht. Die Querschnitte der Kanäle 6 bis 8 gehen hingegen besser aus Fig. 1 hervor. An Längskanäle 7, die sich im Randbereich der Brennstoffzelle 1 in deren Längserstreckungsrichtung ausdehnen, schließen Querkanäle 6 an. Der Querschnitt der Querkanäle 6 nimmt mit Abstand von den Längskanälen 7 ab. Parallel zu den Längskanten 10 im Randbereich der Brennstoffzelle 1 verlaufen noch weitere Kanäle 8. Diese Kanäle 8 kreuzen die Querkanäle 6 und unterscheiden sich von den Längskanälen 7 durch einen kleineren Querschnitt und dadurch, dass sie nicht direkt an eine Gasversorgungsquelle angeschlossen sind, sondern nur indirekt über die Querkanäle 6 mit Gas beaufschlagt werden. Die Kanäle 8 verhindern bei auftretender lokaler Verstopfung eines Querkanals 6, dass der ganze hinter der Verstopfung liegende Bereich ohne Gasversorgung ist. Der abnehmende Querschnitt der Querkanäle 6 von den Längskanälen 7 weg trägt der Tatsache Rechnung, dass die durch die Querkanäle 6 in dieser Richtung fließenden Gasmengen stetig abnehmen, weil Gas aus den Querkanälen 6 in die angrenzenden Diffusionsschichten 3 übertritt. So wird durch den abnehmenden Querschnitt der Querkanäle 6 immer eine gewisse Mindestgeschwindigkeit der Gasdurchströmung aufrecht erhalten.

Die in den Fig. 3 und 4 skizzierte Ausführungsform der neuen Brennstoffzellen 1 unterscheidet sich von derjenigen gemäß den Fig. 1 und 2 dadurch, dass hier auf jeder Seite der PEM 2 jeweils zwei Längskanäle 7 und 9 vorgesehen sind. Dabei mündet jeder Querkanal 6 in seinem Bereich mit minimalem Querschnitt in den Längskanal 9 ein, der im Vergleich zu dem Längskanal 7 auf geringerem Gasdruck gehalten wird. Auf diese Weise wird eine Durchströmung der Querkanäle 6 nicht nur durch das aus den Querkanälen 6 in die Diffusionsschichten 3 übertretende Gas sondern allein durch eine Gasübertragung von den Längskanälen 7 in die Längskanäle 9 sichergestellt.

Fig. 5 zeigt eine Variante der Ausführungsform der Brennstoffzelle gemäß den Fig. 3 und 4 mit zwei Längskanälen 7 und 9 auf jeder Seite der PEM. Dargestellt ist eine Draufsicht auf eine Elektrodenoberfläche 4. Hierbei gibt es neben den Querkanälen 6 auch Querkanäle 11, wobei sich die Querkanäle 6 von dem Längskanal 7 aus erstrecken und vor dem Querkanal 9 geschlossen enden. Zwischen jeweils zwei Querkanälen 6 liegt ein Querkanal 11, der sich von dem Längskanal 9 erstreckt und vor dem Längskanal 7 geschlossen endet. Wenn jetzt die beiden Längskanäle 7 und 9 auf unterschiedlichem Gasdruck gehalten werden, bildet sich eine Gasdruckdifferenz zwischen jeweils zwei nebeneinanderliegenden Querkanälen 6 und 11 aus, die zu einer Gasdurchströmung der davor liegenden Diffusionsschicht 3 in der Längserstreckungsrichtung der Brennstoffzelle 1 führt.

Die bis hierher aufgezeigten Ausführungsformen der neuen Brennstoffzelle 1 lassen sich besonders gut realisieren, wenn die Elektrodenkörper 5 aus mit Kunststoff verstärktem Graphit ausgebildet werden. Dabei können die Kanäle 6 bis 9 und 11 in nicht abtragender Weise in Streifen aus kunststoffverstärktem Graphit eingeprägt werden. Grundsätzlich ist es auch möglich, die Elektrodenformkörper aus Metall, beispielsweise Metallblech herzustellen. Dies kann ebenfalls durch nicht abtragende Umformung, beispielsweise Kaltverformung erfolgen. Wenn dabei auch die Längskanäle 7 und 9 in Elektrodenformkörpern aus Metall ausgebildet werden, ergibt sich jedoch eine extreme Aussteifung des Profils, die einem Aufwickeln der Brennstoffzelle 1 in ihrer Haupterstreckungsrichtung entgegensteht.

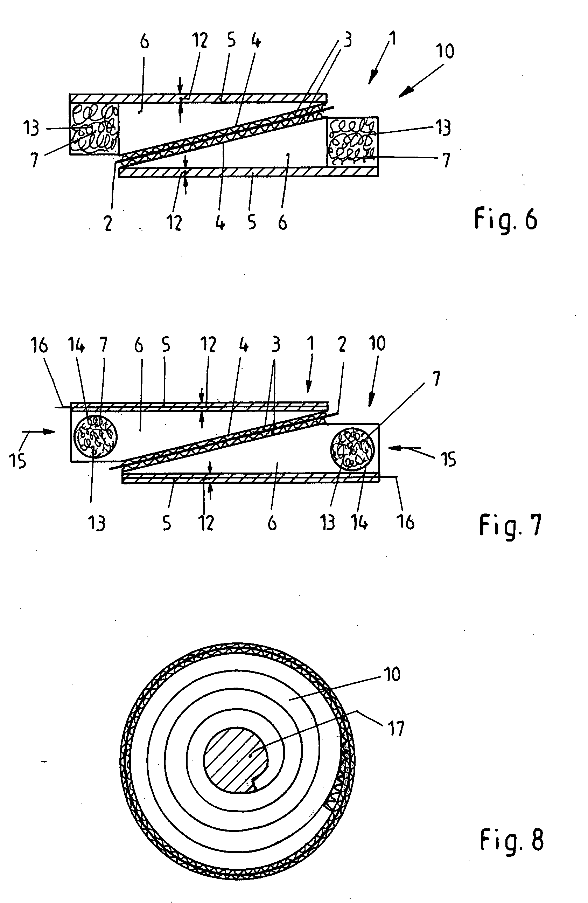

Die in Fig. 6 skizzierte Ausführungsform der neuen Brennstoffzelle weist zwei Elektrodenformkörper 5 auf, deren Querschnitte beiderseits der PEM 2 komplementäre Dreiecke beschreiben. Durch die in Querrichtung abnehmenden Querschnitte der Querkanäle 6 wird dennoch eine gleichmäßige Wandstärke 12 der Elektrodenformkörper 5 am Grund der Querkanäle 6 erreicht. Dies erleichtert ein Aufwickeln der Brennstoffzelle 1 gemäß Fig. 6 in ihrer Haupterstreckungsrichtung ganz erheblich. Hierbei ist nur der kegelmantelartige Verlauf der PEM und der angrenzenden Diffusionsschichten 3 zu berücksichtigen. Die Längskanäle 7 sind gemäß Fig. 6 durch poröse Füllkörper 13 definiert, die direkt an die Querkanäle 9 angrenzen. Zur seitlichen Abdichtung kann der Aufbau gemäß Fig. 6 im Bereich beider Längskanten 10 mit einer Abdichtmasse vergossen werden. Dies kann vor oder nach dem Aufwickeln der Brennstoffzelle 1 in ihrer Längserstreckungsrichtung geschehen.

Fig. 7 zeigt eine Abwandlung der Ausführungsform der Brennstoffzelle 1 gemäß Fig. 6. Hier weist der Formkörper 5 auch in dem Bereich des Längskanals 7 seine volle Höhe zwischen den Querkanälen 6 auf. Für jeden Längskanal 7 sind dort Bohrungen 14 vorgesehen, in denen der poröse Füllkörper 13 angeordnet ist. Auch diese Anordnung behindert nicht das Aufwickeln der Brennstoffzelle 1 in ihrer Haupterstreckungsrichtung bei hinreichender Flexibilität des Füllkörpers 13. Bei der Ausführungsform gemäß Fig. 7 ist es möglich, in Richtung von Pfeilen 15 seitlichen Druck auf die Brennstoffzelle 1 auszuüben, der bei rückwärtiger Abstützung der Elektrodenformkörper 5, beispielsweise in einer Wickelanordnung, zur Ausbildung eines ausgeprägten Anpressdrucks der Elektrodenoberflächen 4 an die Diffusionsschichten 3 und der Diffusionsschichten 3 an die PEM 2 führt. Dieser hohe Anpressdruck ist für eine störungsfreie Funktion einer PEM-Brennstoffzelle 1 erforderlich. Weiterhin sind gemäß Fig. 7 in dem Bereich durchgehender Wandstärke 12 Metallfolieneinlagen 16 in den hier aus kunststoffverstärktem Graphit ausgebildeten Elektrodenformkörpern 5 vorgesehen. Hierdurch wird die Leitfähigkeit der Elektrodenformkörper 5 verbessert. Die Metallfolieneinlagen 16 erlauben es auch, in vereinfachter Weise den in der Brennstoffzelle 1 erzeugten Strom im Bereich der Längskanten 10 abzugreifen. Auch die Längskanäle 7 können beispielsweise in bestimmten Abständen an seitliche Gasversorgungsleitungen angeschlossen sein.

Fig. 8 zeigt schematisch eine aufgewickelte Brennstoffzelle 1, wobei nur deren eine Längskante 10 zu sehen ist. Die Wickel der Brennstoffzelle 1 befindet sich zwischen einem Kern 17 und einer Hülse 18 als innere bzw. äußere Abstützung der Wickelanordnung. Wenn jetzt die Brennstoffzelle 1 gemäß Fig. 7 ausgebildet ist, kann durch Aufbringen seitlicher, d. h. hier axialer Kräfte auf die Wickelanordnung ein sehr hoher Anpressdruck zwischen den Elektrodenoberflächen 4, den Diffusionsschichten 3 und der PEM 2 erzielt werden.

### BEZUGSZEICHENLISTE

- 1 -: Brennstoffzelle
- 2 -: Polymer-Elektrolyt-Membran
- 3 -: Diffusionsschicht
- 4 -: Elektrodenoberfläche
- 5 -: Elektrodenformkörper
- 6 -: Querkanal
- 7 -: Längskanal
- 8 -: Kanal
- 9 -: Längskanal
- 10 -: Längskante

- 11 -: Querkanal
- 12 -: Wandstärke
- 13 -: Füllkörper
- 14 -: Bohrung
- 15 -: Pfeil
- 16 -: Metallfolieneinlage
- 17 -: Kern
- 18 -: Hülse

## Patentansprüche

1. Langgestreckte Brennstoffzelle mit Querkanälen zur Gasversorgung auf mindestens einer Seite einer Polymer-Elektrolyt-Membran (PEM), wobei die Querkanäle hinter einer die PEM bedeckenden Diffusionsschicht im Bereich einer die Diffusionsschicht rückwärtig abstützenden Elektrodenoberfläche ausgebildet sind und in Querrichtung zu den Längskanten der Brennstoffzelle verlaufen, **dadurch gekennzeichnet, dass** mehrere der Querkanäle (6, 11) auf der mindestens einen Seite der PEM (2) einen von einer Längskante (10) zur anderen Längskante (10) der Brennstoffzelle (1) abnehmenden Querschnitt aufweisen.

2. Brennstoffzelle nach Anspruch 1, **dadurch gekennzeichnet, dass** mehrere Querkanäle (6, 11) auf der anderen Seite der PEM einen von der anderen Längskante (10) zu der einen Längskante (10) der Brennstoffzelle (1) abnehmenden Querschnitt aufweisen.

3. Brennstoffzelle nach Anspruch 1 oder 2, **dadurch gekennzeichnet, dass** alle Querkanäle (6) auf mindestens einer Seite der PEM (2) einen von der einen Längskante (10) zu der anderen Längskante (10) der Brennstoffzelle (1) abnehmenden Querschnitt aufweisen und in einem die Elektrodenoberfläche (4) aufweisenden Elektrodenformkörper (5) vorgesehen sind, dessen Höhe in derselben Richtung wie der Querschnitt der Querkanäle (6) abnimmt.

4. Brennstoffzelle nach Anspruch 3, **dadurch gekennzeichnet, dass** der Querschnitt des Elektrodenformkörpers (5) ein rechtwinkliges Dreieck beschreibt.

5. Brennstoffzelle nach Anspruch 4, **dadurch gekennzeichnet, dass** die Querschnitte der beiden Elektrodenformkörper (5) auf beiden Seiten der PEM (2) komplementäre Dreiecke beschreiben und dass Druckaufbringeinrichtungen vorgesehen sind, mit denen die beiden Elektrodenformkörper (5) in Querrichtung zu den Längskanten (10) der Brennstoffzelle (1) gegeneinander beaufschlagbar sind.

6. Brennstoffzelle nach einem der Ansprüche 3 bis 5, **dadurch gekennzeichnet, daß** die Wandstärke (12) jedes Elektrodenformkörpers (5) am Grund der Querkanäle (6) über die wesentliche Länge der Querkanäle (6) konstant ist.

7. Brennstoffzelle nach einem der Ansprüche 1 bis 6, **dadurch gekennzeichnet, daß** die Brennstoffzelle (1) ihrer Länge nach aufgewickelt ist.

8. Brennstoffzelle nach einem der Ansprüche 1 bis 7, **dadurch gekennzeichnet, daß** mehrere Querkanäle (6, 11) auf mindestens einer Seite der PEM (2) mit mindestens einem im Bereich einer der Längskanten (11) der Brennstoffzelle (1) verlaufenden Längskanal (7, 9) verbunden sind.

9. Brennstoffzelle nach Anspruch 8, **dadurch gekennzeichnet, dass** auf mindestens einer Seite der PEM (2) im Bereich jeder der beiden Längskanten (10) ein Längskanal (7, 9) vorgesehen ist, wobei die beiden Längskanäle (7, 9) im Betrieb der Brennstoffzelle (1) unter unterschiedlichem Gasdruck stehen.

10. Brennstoffzelle nach Anspruch 8 oder 9, **dadurch gekennzeichnet, dass** jeder Längskanal (6, 9) in einem die Elektrodenoberfläche (4) aufweisenden Elektrodenformkörper (5) vorgesehen ist.

11. Brennstoffzelle nach einem der Ansprüche 1 bis 10, **dadurch gekennzeichnet, dass** alle Kanäle (7 - 9, 11) in einen die Elektrodenoberfläche (4) aufweisenden Elektrodenformkörper (5) nicht abtragend eingeformt sind.

12. Brennstoffzelle nach Anspruch 11, **dadurch gekennzeichnet, dass** der Elektrodenformkörper (5) aus Metall oder aus kunststoffverstärktem Graphit ausgebildet ist.

13. Brennstoffzelle nach einem der Ansprüche 1 bis 12, **dadurch gekennzeichnet, dass** auf mindestens einer Seite der PEM (2) zusätzliche Kanäle (8) vorgesehen sind, die die Querkanäle zwischen den Längskanten (10) der Brennstoffzelle (1) kreuzen.

14. Brennstoffzelle nach einem der Ansprüche 1 bis 13, **dadurch gekennzeichnet, dass** in mindestens einem der Kanäle (7 -9, 11) ein poröser Füllkörper (13) zur Querschnittsstabilisierung des Kanals vorgesehen ist.
